# EUROPÄISCHE PATENTSCHRIFT

(11) **EP 0 603 531 B1**
(45) Veröffentlichungstag und Bekanntmachung des Hinweises auf die Patenterteilung: **05.02.1997**
(21) Anmeldenummer: 93118294.3
(22) Anmeldetag: 11.11.1993
(51) Int. Cl.: B65D 1/38, B65D 25/30

(54) **Flaschenkasten aus Kunststoff mit einem Handgriff**
Plastic bottle crate with handle
Casier à bouteilles en matière plastique avec poignée

(30) Priorität: 23.12.1992 DE 4243931
(43) Veröffentlichungstag der Anmeldung: 29.06.1994
(73) Patentinhaber: Schoeller-Plast S.A., CH-1680 Romont (CH)
(72) Erfinder: Umiker, Hans, CH-8132 Egg/Zh (CH)
(74) Vertreter: Herrmann-Trentepohl, Werner, Dipl.-Ing.

(56) Entgegenhaltungen:
- EP-A- 0 460 367
- EP-A- 0 486 107

## Beschreibung

Die Erfindung betrifft einen Flaschenkasten gemäß dem Oberbegriff des Patentanspruches 1.

Üblicherweise sind Handgriffe an Flaschenkästen durch stegförmige Griffleisten am oberen Rand des Flaschenkastens gebildet, deren unterer Rand durch Durchgriffsöffnungen in den Seitenwänden begrenzt ist. Bekannt sind hierbei Ausbildungen von Handgriffen, die Hohlräume aufweisen, wobei die Hohlräume entweder durch Gaseinblasung oder durch Formschwerter gebildet sind. Ferner sind Lamellen im Bereich der Grifffläche bekannt, die parallel und eng beabstandet zueinander angeordnet sind und eine quasi geschlossene Grifffläche bilden.

Ein Flaschenkasten nach dem Oberbegriff des Anspruchs 1 ist aus Dokument EP-A-0 486 107 bekannt. Dieses Dokument beschreibt einen Kunststoffkasten mit teilweise hohlem Handgriff, der integraler Bestandteil des Kunststoffkastens ist und einstückig mit diesem ausgeformt wird. Trotz der unbestreitbaren Vorteile, die ein derartiger integral mit einem Kasten ausgebildeter und teilweise hohler Handgriff in bezug auf notwendige Wandstärken und den Tragekomfort hat, ist es bei der Vorrichtung nach Maßgabe des Dokumentes EP-A-0 486 107 als nachteilig anzusehen, daß hier nach wie vor eine strikte Trennung zwischen den Kastenelementen an sich und den Elementen des Handgriffes vorliegt. Es muß ein dementsprechend großer fertigungstechnischer Aufwand betrieben werden, um den Handgriff in der offenbarten Form ausbilden zu können, wobei dieser Aufwand in keiner ersichtlichen Weise der Gesamtstruktur des Kastens zugute kommt. Darüber hinaus verbleibt bei dem Handgriff nach dem genannten Dokument eine deutliche Beeinträchtigung der Grifffreundlichkeit und damit des Tragekomforts des Kastens durch die verbleibenden Ausnehmungen zwischen den hohlen Bereichen des Handgriffes, was eine Handhabung eines beladenen derartigen Kastens durch körperlich schwächere Personen problematisch macht.

Darüber hinaus ist aus dem Dokument EP-A-0 460 367 die Ausbildung eines Handgriffes zum Tragen eines Gegenstandes bekannt, wobei an einem insbesondere an einem Kasten aus Kunststoff angeformten Griff mehrere lamellenartige, senkrecht verlaufende Stege angeordnet sind, die senkrecht von einer vertikal verlaufenden Außenwand abstehen und sich zwischen zwei von dieser Außenwand ausgehenden horizontal nach innen stehenden Wandstutzen erstrecken. Die Lamellenausbildung, die in diesem Dokument beschrieben ist, bezieht sich daher auf einen im wesentlichen herkömmlichen Flaschenkasten, dessen Handgriffbereich mit Lamellen versehen ist, der sich ansonsten aber nicht von herkömmlichen Kästen unterscheidet und damit im wesentlichen gleiche Nachteile zeigt.

Die Aufgabe der vorliegenden Erfindung ist es, einen Flaschenkasten mit Handgriffen zu schaffen, wobei der Handgriff, große Stabilität sowie ein optimales Griffverhalten aufweist, sowie einfach und kostengünstig herstellbar sein soll.

Diese Aufgabe wird erfindungsgemäß durch die im Anspruch 1 enthaltenen Merkmale gelöst, wobei zweckmäßige Weiterbildungen durch die in den Unteransprüchen enthaltenen Merkmale gekennzeichnet sind.

Nach Maßgabe der Erfindung sind bevorzugt durch Gaseinblasung gebildete Hohlräume in einem Handgriff vorgesehen, wobei die Hohlräume bzw. die dadurch gebildeten Griffwulste durch eng beabstandete Lamellen überbrückt sind. Durch die Verwendung der Lamellen können die Hohlräume klein gehalten werden, ohne den Tragekomfort zu beeinträchtigen, so daß weniger Gas benötigt wird. Auf diese Art vereinfacht sich die Produktionsweise. Ferner lassen sich durch die Kombination aus Hohlräumen und Lamellen innerhalb des Handgriffes bessere ergonomische Formen und damit ein besseres Trageverhalten erzielen. Schließlich wird durch die erfindungsgemäße Herstellweise ein gerades Handgriffprofil sichergestellt, da hier nicht wie beim vollständig aufgeblasenen Handgriff die Tendenz besteht, durch den Aufblaseffekt ein rechteckiges Hohlprofil oval werden zu lassen.

Nachfolgend wird ein bevorzugtes Ausführungsbeispiel der Erfindung anhand der Zeichnungen beschrieben.

Darin zeigen:
- Fig. 1: eine Schnittansicht durch einen in einem Flaschenkasten ausgebildeten Handgriff sowie
- Fig. 2: eine Ansicht des in Fig. 1 dargestellten Handgriffs eines Flaschenkastens, gesehen von der Innenseite des Flaschenkastens her.

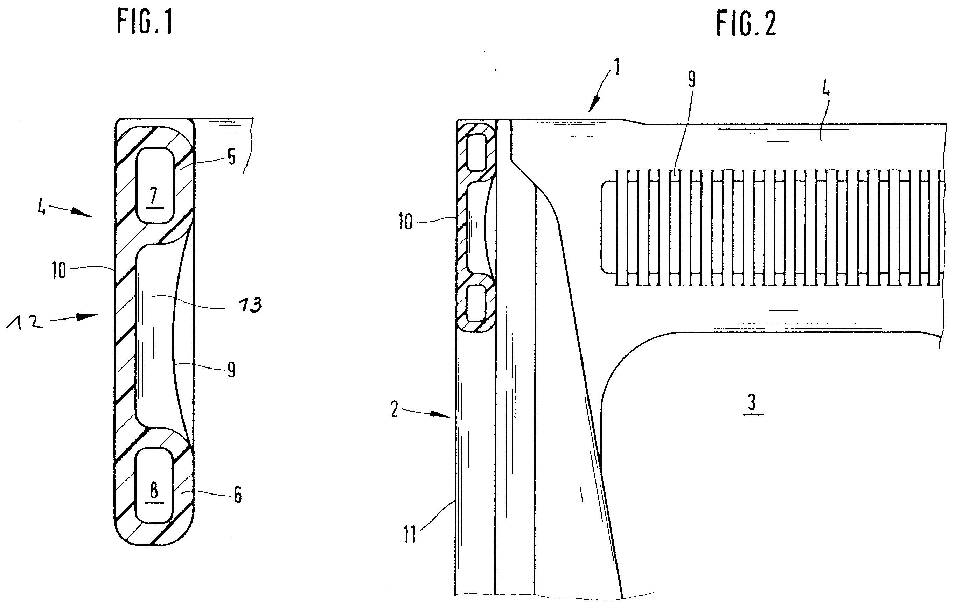

Fig. 2 zeigt einen Teil eines Flaschenkastens, gesehen von der Innenseite her, wobei mit 1 die in der Zeichnungsebene befindliche Seitenwand und mit 2 die orthogonal hierzu verlaufende Seitenwand des im übrigen aus vier Seitenwänden und einem Boden aufgebauten Kastens gekennzeichnet sind. Durch eine Öffnung 3 in der Seitenwand 1 ist am oberen Rand des Kastens ein mit 4 bezeichneter Handgriff gebildet, der in Fig. 1 im Schnitt näher dargestellt ist. Der Handgriff 4 in Art eines querverlaufenden Steges weist einen oberen Griffwulst 5 und einen unteren, mit Abstand hierzu angeordneten Griffwulst 6 auf, wobei der mit 12 bezeichnete mittlere Abschnitt quasi durch eine Ausnehmung von der Innenseite des Kastens her gebildet ist. Dadurch weist der Handgriff im wesentlichen C-Profilform auf. Im oberen und unteren Griffwulst 5 und 6 befinden sich je ein Hohlraum 7 bzw. 8, wobei sich die Hohlräume 7, 8 erfindungsgemäß über die gesamte Seitenwandbreite bzw. Länge erstrecken. In einem bevorzugten Ausführungsbeispiel kann vorgesehen sein, daß sich die Hohlräume 7, 8 über den gesamten Umfang des Flaschenkastens erstrecken. Die Griffwulste 5 und 6 und auch die Hohlräume 7 und 8 sind im dargestellten Ausführungsbeispiel im wesentlichen von rechteckförmigem Querschnitt, wobei die Ränder bzw. Ecken abgerundet sind. Die Griffwulst 5 und 6 bzw. die mit 13 bezeichnete Aussparung sind durch eng beabstandete Lamellen 9 überbrückt, die in Fig. 2 vorzugsweise in Draufsicht und in Fig. 1 in Seitenansicht ersichtlich sind. Im dargestellten Ausführungsbeispiel ist der Stirnrand 9 der Lamellen konkav gewölbt. Die Lamellen münden einerseits in den Griffwulsten 5 und 6 und verlaufen andererseits im mittleren Abschnitt 12 und sind einstückig ausgebildet. Die Lamellen 9 bilden miteinander eine quasi-geschlossene, d.h. weitgehend einer geschlossenen Grifffläche angenäherte Grifffläche. Die Wandstärke der Griffwulste 5 und 6 und des mittleren Abschnittes 12 sind im wesentlichen gleich. Die Außenfläche 10 des Handgriffes verläuft im wesentlichen bündig mit der Außenfläche 11 (Fig. 2) der entsprechenden Seitenwand, in welcher der Handgriff angeordnet ist. Selbstverständlich können in Abweichung von der dargestellten Lamellenform die Lamellen unterschiedlich geformt sein, beispielsweise nach außen vorstehen und konvex gewölbt sein bzw. mit der Innenfläche der Griffwülste bündig und damit parallel zur Außenfläche 10 verlaufen.

Die Hohlräume sind im dargestellten Ausführungsbeispiel durch Gaseinblasung gebildet und über den Umfang geschlossen. Die Herstellung der Hohlräume erfolgt hierbei mit der Herstellung der Flaschenkästen, wobei in den noch schmelzflüssigen Kunststoff innerhalb der Form Gas eingeblasen wird.

## Patentansprüche

1. Flaschenkasten aus Kunststoff mit einem Boden und Seitenwänden sowie mindestens einem einstückig angeformten, als querverlaufender Steg ausgebildeten und teilweise hohlen Handgriff (4), **dadurch gekennzeichnet**, **daß** der Handgriff (4) durch zumindest einen oberen und einen unteren hohlprofilartigen Versteifungskanal (5, 6) gebildet ist der jeweils an einer oberen bzw. einer unteren Handgriffseite vorgesehen ist, wobei die Versteifungskanäle (5, 6) sich im wesentlichen längs über die jeweilige Seitenbreite erstrecken, und auf zumindest einer Griffläche eng beabstandete Lamellen (9) vorgesehen sind, die eine quasi geschlossene Griffläche bilden.

2. Kasten nach Anspruch 1, **dadurch gekennzeichnet, daß** die Hohlräume (7, 8) der Versteifungskanäle (5, 6) über den Umfang durch Handgriffseitenwände vollständig geschlossen sind.

3. Kasten nach Anspruch 1 oder 2, **dadurch gekennzeichnet, daß** die Versteifungskanäle (5, 6) zueinander bevorzugt parallel und im übrigen in einem Abstand angeordnet sind, der durch die Lamellen (9) überbrückt ist, die sich von einem Versteifungskanal (5, 6) zum anderen erstrecken.

4. Kasten nach einem der vorhergehenden Ansprüche, **dadurch gekennzeichnet, daß** der obere und untere Rand (4) des Handgriffes (4) durch Versteifungskanäle (5, 6) begrenzt ist und daß der mittlere Abschnitt (12) des Handgriffes (4) die Lamellen (9) aufweist.

5. Kasten nach einem der vorhergehenden Ansprüche, **dadurch gekennzeichnet, daß** die Außenflächen (10) der Versteifungskanäle (5, 6) miteinander und mit der Außenfläche des mittleren Abschnittes (12) bündig sind sowie bevorzugt parallel oder in derselben Ebene der den Handgriff aufweisenden Seitenwandfläche (11) ausgerichtet sind.

6. Kasten nach einem der vorhergehenden Ansprüche, **dadurch gekennzeichnet, daß** die Wandstärken der Versteifungskanäle (5, 6) im wesentlichen der Wandstärke des mittleren Handgriffabschnittes entsprechen.

7. Kasten nach einem der vorhergehenden Ansprüche, **dadurch gekennzeichnet, daß** die Lamellen (9) ein konkaves Profil aufweisen, bzw. der stirnseitige Rand konkav verläuft.

8. Kasten nach einem der vorhergehenden Ansprüche, **dadurch gekennzeichnet, daß** die Lamellen (9) parallel zueinander ausgerichtet sind.

9. Kasten nach einem der vorhergehenden Ansprüche, **dadurch gekennzeichnet, daß** die Hohlräume (7, 8) der Versteifungskanäle (5, 6) durch Gaseinblasung gebildet sind.

10. Kasten nach einem der vorhergehenden Ansprüche, **dadurch gekennzeichnet, daß** die Versteifungskanäle (5, 6) mit den Hohlräumen (7, 8) im wesentlichen einen rechteckförmigen Querschnitt mit gerundeten Kanten bzw. Ecken aufweisen.

## Claims

1. Plastic bottle crate with a base and side walls and at least one partially hollow handle (4), which is integrally moulded on and constructed as a transversely extending bar, characterised in that the handle (4) is constituted by at least an upper and a lower hollow profile-like stiffening passage (5,6), which is provided on an upper and a lower side of the handle, respectively, which stiffening passages (5,6) extend substantially longitudinally over the respective lateral breadth, and closely spaced webs (9) are provided on at least one handle surface which afford a quasi continuous handle surface.

2. Crate as claimed in claim 1, characterised in that the hollow spaces (7,8) of the stiffening passages (5,6) are completely closed over their periphery by handle side walls.

3. Crate as claimed in claim 1 or 2, characterised in that the stiffening passages (5,6) are arranged preferably parallel to one another and at a spacing which is bridged by the webs (9) which extend from one stiffening passage (5,6) to the other.

4. Crate as claimed in one of the preceding claims, characterised in that the upper and lower edge (4) of the handle (4) is defined by stiffening passages (5,6) and that the middle section (12) of the handle (4) affords the webs (9).

5. Crate as claimed in one of the preceding claims, characterised in that the outer surfaces (10) of the stiffening passages (5,6) are flush with one another and with the outer surface of the middle section (12) and are preferably aligned parallel to or in the same plane as the side wall surface (11) affording the handle.

6. Crate as claimed in one of the preceding claims, characterised in that the wall thicknesses of the stiffening passages (5,6) substantially correspond to the wall thickness of the middle section of the handle.

7. Crate as claimed in one of the preceding claims, characterised in that the webs (9) have a concave profile or the front edge extends in a concave shape.

8. Crate as claimed in one of the preceding claims, characterised in that the webs (9) are aligned parallel to one another.

9. Crate as claimed in one of the preceding claims, characterised in that the hollow spaces (7,8) in the stiffening passages (5,6) are formed by gas injection.

10. Crate as claimed in one of the preceding claims, characterised in that the stiffening passages (5,6) with the hollow spaces (7,8) substantially have a rectangular cross-section with rounded edges or corners.

## Revendications

1. Casier à bouteilles, en matière plastique, comportant un fond et des parois latérales, ainsi qu'au moins une poignée (4) partiellement creuse, réalisée en formant une seule pièce, sous la forme d'un barreau transversal,
caractérisé en ce que
la poignée (4) est formée d'au moins un canal supérieur et d'un canal inférieur de rigidification (5, 6), du genre profilé creux, qui sont chacun respectivement prévus sur une face supérieure et sur une face inférieure de la poignée, étant entendu que les canaux de rigidification (5, 6) s'étendent essentiellement le long de chaque largeur latérale et que, sur au moins une surface de prise, des lamelles (9) sont prévues, situées à distance rapprochée et qui forment une surface de prise presque fermée.

2. Casier suivant la revendication 1, caractérisé en ce que les volumes creux (7, 8) des canaux de rigidification (5, 6) sont, sur leur périphérie, fermés complètement par des parois latérales de la poignée.

3. Casier suivant la revendication 1 ou la revendication 2, caractérisé en ce que les canaux de rigidification (5, 6) sont disposés, de préférence, parallèles entre eux et, par ailleurs, à une certaine distance, qui est couverte par les lamelles (9), qui s'étendent d'un canal de rigidification (5, 6) à l'autre.

4. Casier suivant l'une des revendications précédentes, caractérisé en ce que le bord supérieur et le bord inférieur (4) de la poignée (4) sont délimités par des canaux de rigidification (5, 6) et en ce que la section médiane (12) de la poignée (4) présente les lamelles (9).

5. Casier suivant l'une des revendications précédentes, caractérisé en ce que les surfaces extérieures (10) des canaux de rigidification (5, 6) affleurent entre elles et avec la surface externe de la section médiane (12), et ont, de préférence, une direction parallèle, ou ont la même direction que le plan de la surface (11) de paroi latérale présentant la poignée (4).

6. Casier suivant l'une des revendications précédentes, caractérisé en ce que les épaisseurs de paroi des canaux de rigidification (5, 6) correspondent essentiellement à l'épaisseur de parois de la section médiane de la poignée.

7. Casier suivant l'une des revendications précédentes, caractérisé en ce que les lamelles (9) présentent un profil concave, ou que leur bord frontal a un tracé concave.

8. Casier suivant l'une des revendications précédentes, caractérisé en ce que les lamelles (9) sont dirigées parallèlement les unes aux autres.

9. Casier suivant l'une des revendications précédentes, caractérisé en ce que les volumes creux (7, 8) des canaux de rigidification (5, 6) sont réalisés par insufflation de gaz.

10. Casier suivant l'une des revendications précédentes, caractérisé en ce que les canaux de rigidification (5, 6), avec les volumes creux (5, 6) présentent essentiellement une section rectangulaire comportant des arêtes ou des coins arrondis.
